# EUROPEAN PATENT SPECIFICATION

(11) **EP 2 480 813 B1**
(45) Date of publication and mention of the grant of the patent: **26.06.2013**
(21) Application number: 10776139.7
(22) Date of filing: 20.09.2010
(51) Int. Cl.: F16L 19/00

(54) **SAFETY COLLAR FOR PIPE FITTING UNION**
SICHERHEITSMUFFE FÜR EINE ROHRVERBINDUNG
COLLIER DE SÉCURITÉ POUR RACCORD DE TUYAUTERIE

(30) Priority: 21.09.2009 IT TO20090134 U
(43) Date of publication of application: 01.08.2012
(73) Proprietor: Artini, Paolo, 10022 Carmagnola (Torino) (IT)
(72) Inventor: Artini, Paolo, 10022 Carmagnola (Torino) (IT)
(74) Representative: Aprà, Mario
(86) International application number: PCT/IB2010/002338
(87) International publication number: WO 2011/033376

(56) References cited:
- EP-A1- 1 959 180
- DE-U1- 29 701 745
- US-A- 6 019 558
- US-A- 6 139 068

## Description

This invention concerns a safety collar for pipe fitting union.

US-A-6,019,558 discloses a nut and bolt securing device to prevent loosening of the assembly due to environmental conditions. The two piece device is fitted over a nut and a portion of a bolt extending from the nut, the two sections of the device being secured together with set screws, with serrations within the device, and one or more set screws engaging the front end of the device.

The device is particularly described in use in conjunction with refrigerant system flare nuts so as to prevent loss of refrigerant at these flare nut unions.

The above said device cannot be easily installed, particularly on already installed and operating pipe fitting unions.

The safety collar for pipe fitting union according to the invention performs anti-disconnection and anti-loosening functions, i.e. it ensures the safe mechanical junction of unions with stiff pipes of different diameters.

The safety collar according to the invention is applicable to hydraulic, oil-pressure and pneumatic systems, in particular to those deployed in the automotive, railway and industrial sectors.

As known, a pipe fitting union includes an externally threaded coupling, at least partially, fastened to a pipe end by means of a correspondingly internally threaded nut. The union is mounted by coaxially inserting the following components on the stiff pipe: a nut, a conical ring (which, being tightened in the nut seat, firmly locks the pipe, thus avoiding its disconnection and ensuring its mechanical sealing), a protection washer and an O-ring. The latter, being compressed by the washer housed in its seat on the coupling mouthpiece, ensures the hermetic sealing. The nut is then tightened on the coupling according to the torque value specified by the manufacturer.

During its use, however, the union is subject to stresses and vibrations which can cause a significant decay of the tightening torque with a consequent risk for the sealing and safety of the union itself.

This invention, by addressing the origin of this problem, aims at solving it.

A purpose of this invention is to implement a safety collar for pipe fitting union ensuring an effective and safe mechanical holding of the union and of its corresponding stiff pipe.

Another purpose of this invention is to implement a safety collar as above specified with a simplified structure, easy and handy to use, with safe operating characteristics and a relatively low cost.

To the said purposes, this invention implements a safety collar for pipe fitting union, whose essential characteristics are the object of claim 1.

Further advantageous characteristics are described in the dependent claim.

The said claims are reported in full herein.

This invention is described in detail hereinafter with reference to the enclosed drawing, supplied just as an example, where:

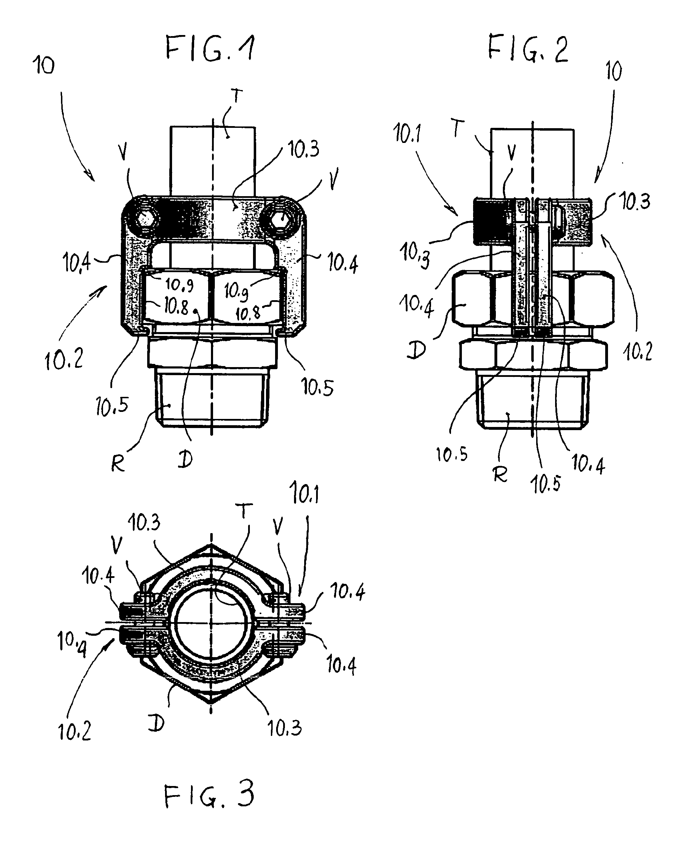

- figures 1, 2 and 3 show the safety collar for pipe fitting union according to an embodiment of the invention in front, side and top views, respectively;
- figure 4 is a perspective exploded view of the safety collar of fig. 1, without screws;
- figure 5 is a perspective view of the safety collar mounted on a pipe fitting union and rotated by 180° with respect to fig. 4.

Reference 10 in the drawing designates the complete safety collar according to an embodiment of the invention. The safety collar 10 is associated with a union R connected with a stiff pipe T by means of a hexagonal nut D.

The said safety collar 10 includes a first and a second brackets substantially U-shaped, 10.1 and 10.2 respectively, which are basically identical and whose intermediate branch 10.3 has a concavity as a circular arc not wider than 180° in a plane substantially orthogonal to the axis of pipe T (i. e. a plane substantially orthogonal to the terminal branches 10.4).

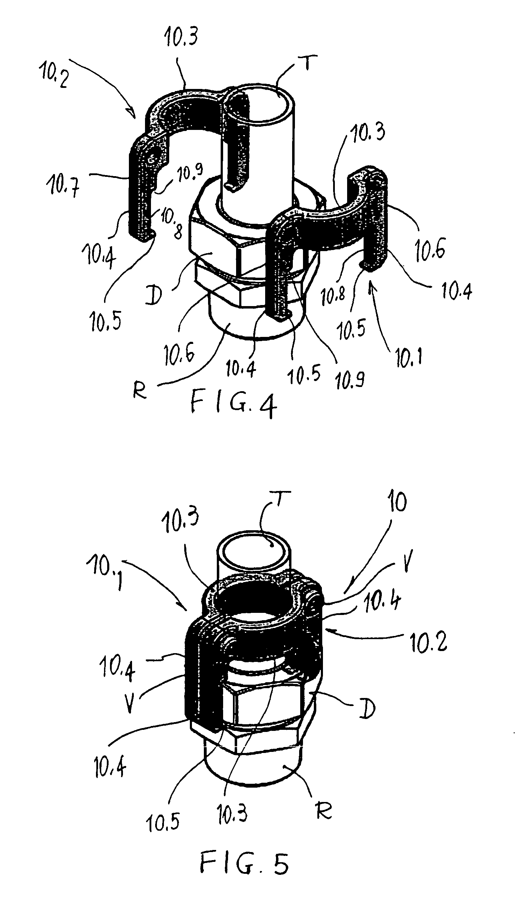

The two terminal branches of brackets 10.1, 10.2 are referred to as 10.4; each of them has a through hole in its base, which is adjacent to the intermediate branch, and a tooth 10.5 projecting towards the inside of the U shape at its free end.
The said holes drilled in the said first bracket 10.1 are threaded and referred to as 10.6 (fig. 4), while the holes drilled in the said second bracket 10.2, referred to as 10.7, have a diameter larger than the said holes 10.6 and allow the threaded shank of a respective screw V to freely pass through and being screwed into the corresponding threaded hole 10.6 in the first bracket 10.1.

Assembling instructions of the safety collar 10.
Place the two brackets 10.1, 10.2 specularly symmetrical with respect to a plane passing through the axis of a pipe T, so letting the end teeth 10.5 of the said terminal branches 10.4 to engage against the lower surface of nut D of union R; insert the shanks of two screws V into the holes 10.7 of the second bracket 10.2 and then screw them into the threaded holes 10.6 of the said first bracket 10.1; finally, tighten the said screws V into the threaded holes 10.6 according to the prescribed torque value, in such a way that the intermediate branches 10.3 of the safety collar 10 clamp the pipe T like a jaw, thus holding nut D of union R, by means of the terminal branches 10.4 terminated with a respective teeth 10.5, in a stable and safe way, so preventing the loosening and disconnection of the union.

In particular, each terminal branch 10.4 has a recess 10.8 facing towards the inside of the bracket, and which is bounded from one side by the said end tooth 10.5 and from the other side by a projection 10.9; this way the said recess 10.8 is juxtaposed with respect to the nut D of union R, thus engaging it at the top by means of the projection 10.9 and at the bottom by the said tooth 10.5.

Each bracket 10.1 can be made as a single piece either of nickel-plated brass, of galvanized steel with white passivation, of stainless steel or of plastic materials, while the two hexagonal-head fastening screws can be made, for example, of galvanized steel.

The coupling diameter of the safety collar may range, as an example, from 4 mm to 8".

The safety collar 10 according to the invention sensibly reduces the tightening torque decay with time, due to external stresses and vibrations with a considerable increase of the holding effectiveness of union R, so improving its primary safety performances. This results from the improvement of the anchorage between pipe T and union R, ensured by the tightening teeth 10.5 engaged between collar 10 and nut D.

It is important to note that the safety collar 10 can be easily installed not only on new equipment but also on already installed and operating pipe fitting unions (retrofit), so considerably improving their safety. The technical anti-disconnection and anti-loosening characteristics have been suitably tested at growing pressures up to 200 bar and with tightening torque values increasing from 30 Nm up to 300 Nm

Obviously, many changes can be made in the practice with respect to what here described and illustrated as long as they fall within the scope of the claims appended herein. For example, the shape, the dimensions, the used materials (which metals and metal alloys, plastic materials) of the safety collar according to the invention can widely change to fit the final users' requirements.

## Claims

1. Safety collar (10) for pipe fitting (T) union (R), in which the said union (R) includes an externally threaded coupling, at least partially, fastened to the pipe (T) end by means of a correspondingly internally threaded nut (D), in which the said safety collar (10) includes a first and a second brackets substantially U-shaped (10.1, 10.2), which are basically identical and in which the intermediate branch (10.3) of each bracket has a concavity as a circular arc not wider than 180° in a plane substantially orthogonal to the axis of the pipe (T), while each terminal branch (10.4) of each bracket has a through hole (10.6, 10.7) in its base, adjacent to the intermediate branch (10.3), and a tooth (10.5) projecting towards the inside of the U-shaped bracket at its free end; the holes (10.6) drilled in the said first bracket being threaded, while the holes (10.7) drilled in the said second bracket allow the threaded shank of a respective screw (V) to freely pass through and being screwed into the corresponding threaded hole (10.6) in the said first bracket (10.1); so that, when the said two brackets (10.1, 10.2) are arranged specularly symmetrical with respect to a plane passing through the axis of the pipe (T), so letting the end teeth (10.5) of the said brackets (10.1, 10.2) to engage against the lower surface of nut (D) of the union (R), and the shanks of two screws (V) are then inserted into the respective holes (10.7) of the said second bracket (10.2) and screwed into the threaded holes (10.6) of the said first bracket (10.1) and the said screws (V) are finally tightened into the threaded holes (10.6) according to the prescribed torque value, the intermediate branches (10.3) of the said brackets (10.1, 10.2) clamp the pipe (T) like a jaw, thus holding the nut (D) of the union (R), by means of the terminal branches (10.4) terminated with a respective teeth (10.5), in a stable and safe way, so preventing the loosening and disconnection of the union.

2. Safety collar according to claim 1, **characterised in that** each terminal branch (10.4) of the said brackets (10.1, 10. 2) has a recess (10.8) facing towards the inside of the U-shaped bracket and which is bounded from one side by the said end tooth (10.5) and from the other side by a projection (10.9), so that the said recess (10.8) is juxtaposed with respect to the nut (D) of the union (R), thus engaging it at the top by means of the said projection (10.9) and at the bottom by the said tooth (10.5).

## Patentansprüche

1. Sicherheitsschelle (10) für das Verbindungsstück (R) eines Rohrs (T), wobei das besagte Verbindungsstück (R) eine Muffe umfasst, die außen, zumindest teilweise, mit einem Gewinde versehen ist, und an einem Ende des Rohrs (T) mittels einer Mutter (D) befestigt ist, die dementsprechend innen mit einem Gewinde versehen ist, wobei die besagte Sicherheitsschelle (10) ein erstes und ein zweites im Wesentlichen "U"-förmiges Spanneisen (10.1, 10.2) umfasst, die im Wesentlichen beide gleich sind und bei dem der Zwischenast (10.3) eines jeden Spanneisens auf einer im Wesentlichen rechtwinklig zur Rohrachse (T) verlaufenden Ebene eine kreisbogenförmige Konkavität aufweist, die nicht größer ist als 180°, während jeder Endast (10.4) jedes Spanneisens an der Basis, die an den besagten Zwischenast (10.3) angrenzt, ein durchgehendes Loch (10.6, 10.7) und an seinem freien Ende einen Zahn (10.5) aufweist, der nach innen des "U"-förmigen Spanneisens ausgerichtet ist, wobei die Löcher (10.6) im besagten ersten Spanneisen mit Gewinde versehen sind, während die Löcher (10.7) im besagten zweiten Spanneisen den freien Durchgang des Schafts einer entsprechenden Schraube (V) erlauben, einer Schraube, die durch Verschraubung ein entsprechendes Gewindeloch (10.6) des besagten ersten Spanneisens (10.1) in Anspruch nehmen kann, so dass, wenn man die besagten beiden Spanneisen (10.1, 10.2) spiegelbildlich symmetrisch in Bezug auf eine für die Achse des Rohrs (T) durchgehende Ebene ausrichtet, die Endzähne (10.5) der besagten Spanneisen (10.1, 10.2) an der unteren Seite der Mutter (D) des Verbindungsstücks (R) in Anspruch genommen werden, und wenn man dann die Schäfte von zwei Schrauben (V) in die jeweiligen Löcher (10.7) des besagten zweiten Spanneisens (10.2) hineinschiebt und sie durch Verschraubung in den Gewindelöchern (10.6) des besagten ersten Spanneisens (10.1) in Anspruch nimmt und die besagten Schrauben (V) anschließend in Bezug auf die Gewindelöcher (10.6) und auf das vorgesehene Drehmoment anzieht, sich die Zwischenäste (10.3) der besagten Spanneisen (10.1, 10.2) um das Rohr (T) wie Bremsbacken festziehen und durch die mit Zähnen (10.5) versehenen Endäste (10.4) die Mutter (D) des Verbindungsstücks (R) stabil und sicher gegen Abschrauben und Herausrutschen des Verbindungsstücks selbst festhalten.

2. Sicherheitsschelle nach Anspruch 1, **gekennzeichnet durch** die Tatsache, dass jeder Endast (10.4) der besagten Spanneisen (10.1, 10.2) eine Einbuchtung (10.8) aufweist, die nach innen des "U"-förmigen Spanneisens ausgerichtet ist, und auf der einen Seite von dem besagten Endzahn (10.5) und auf der anderen Seite von einem Vorsprung (10.9) begrenzt ist, sodass der besagte Vorsprung (10.8) an die besagte Mutter (D) des Verbindungsstücks (R) anstößt und sie von oben mit besagtem Vorsprung (10.9) und von unten mit besagtem Zahn (10.5) in Anspruch nimmt.

## Revendications

1. Collier de sécurité (10) pour raccord (R) de tuyau rigide (T), où ledit raccord (R) comprend un manchon fileté à l'extérieur, au moins en partie, et fixé à une extrémité du tuyau (T) à l'aide d'un écrou (D) fileté à l'intérieur de manière correspondante, où ledit collier de sécurité (10) comprend un premier et un deuxième étrier substantiellement en « U » (10.1, 10.2), essentiellement identiques et où le tronçon intermédiaire (10.3) de chaque étrier présente, dans un plan substantiellement orthogonal à l'axe du tuyau (T), une concavité en arc de cercle ne dépassant pas 180°, tandis que chaque tronçon d'extrémité (10.4) de chaque étrier présente à la base, adjacent audit tronçon intermédiaire (10.3), un trou passant (10.6, 10.7) et à son extrémité libre une dent (10.5) tournée vers l'intérieur de l'étrier en « U », les trous (10.6) prévus dans ledit premier étrier étant fileté, tandis que les trous (10.7) prévus dans ledit deuxième étrier permettent le passage libre du corps d'une vis respective (V), ledit corps pouvant s'engager par vissage dans un trou fileté (10.6) correspondant dudit premier étrier (10.1), de sorte que, lorsque lesdits deux étriers (10.1, 10.2) sont disposés de manière spéculaire et symétrique par rapport à un plan passant par l'axe du tuyau (T), en faisant engager les dents d'extrémité (10.5) desdits étriers (10.1, 10.2) contre la face inférieure de l'écrou (D) du raccord (R), et que l'on enfile ensuite les corps des deux vis (V) dans les trous respectifs (10.7) dudit deuxième étrier (10.2), pour les faire engager par vissage dans les trous filetés (10.6) dudit premier étrier (10.1), puis que l'on serre enfin lesdites vis (V) par rapport aux trous filetés (10.6) au couple prévu, les tronçons intermédiaires (10.3) desdits étriers (10.1, 10.2) se serrent en guise de mâchoires autour du tuyau (T), retenant à l'aide des tronçons d'extrémité (10.4) avec des dents (10.5) l'écrou (D) du raccord (R) de manière stable et sûre contre le dévissage et le glissement sur le raccord.

2. Collier de sécurité selon la revendication 1, **caractérisé par le fait que** chaque tronçon d'extrémité (10.4) desdits étriers (10.1, 10.2) présente un creux (10.8) tourné vers l'intérieur de l'étrier en « U » et qui est délimité, d'un côté, par ladite dent d'extrémité (10.5) et, de l'autre côté, par un relief (10.9), de sorte que ledit creux (10.8) se juxtapose par rapport audit écrou (D) du raccord (R), pour l'engager par le haut avec ledit relief (10.9) et par le bas avec ladite dent (10.5).
